# EUROPEAN PATENT APPLICATION

(11) **EP 4 489 268 A1**
(43) Date of publication of application: **08.01.2025**
(21) Application number: 24183372.2
(22) Date of filing: 20.06.2024
(51) Int. Cl.: H02K 5/20, H02K 9/19, H02K 9/22, H02K 11/01, H02K 11/22, H02K 11/33, H02K 5/22

(54) **MOTOR INTEGRATED INVERTER**

(30) Priority: 22.06.2023 US 202363509674 P
(71) Applicant: Solaredge Technologies Ltd., Herzeliya 4673335 (IL)
(72) Inventor: WINTERLING, Michael, 4673335 Herzeliya (IL); GOMBERG, Bryon Roos, 4673335 Herzeliya (IL)
(74) Representative: V.O.

(57) **Abstract**

An inverter may be integrated with an electric motor in a single housing. Coolant may enter a coolant channel of the housing and be directed to the electric motor. The inverter may include a printed circuit board (PCB) and power switches. The PCB may be located in the center of the housing. The power switches may be located outside of the PCB on an opposing face of the coolant channel. A spring may apply a force to the power switches to maintain thermal contact between the power switches and the coolant channel. Flexible leads may connect between the power switches and the PCB. The electric motor may include a shaft that is located adjacent to the PCB. The shaft may include a fiducial mark, and the PCB may include a sensor configured to detect the fiducial mark to determine a rotational speed of the shaft.

## Description

### CROSS-REFERENCE TO RELATED APPLICATION

This application claims the benefit of U.S. Provisional Patent Application No. 63/509,674 filed on June 22, 2023. The above referenced application is hereby incorporated by reference in its entirety for all purposes.

### TECHNICAL FIELD OF THE INVENTION

Aspects of this disclosure relate to the field of power supplies, more specifically to inverters for electric (or electrical) motors.

### BACKGROUND

Compressors and traction motors use inverters to supply alternating current (AC) power to the coils of an electric motor. The coils may be on a stator, a rotor, or both, depending on the type of the electric motor. The AC power causes the rotor to rotate due to magnetic forces between components of the rotor and the stator. The voltage, frequency, and current of the AC power determine the rotation speed, torque, etc.

### SUMMARY

The following presents a simplified summary of various concepts disclosed herein. This summary is not an extensive overview and is not intended to identify key or critical elements or to delineate the scope of the claims. This summary is not intended to limit or constrain the present disclosure.

Aspects of the disclosure relate to an inverter integrated with an electric motor. The inverter and the motor may be contained in a single housing with the motor in a first part of the housing and the inverter in a second part of the housing. Coolant may enter a coolant channel of the second part of the housing and may be therefrom directed to the first part for cooling the electric motor. The coolant channel may be near the periphery of the second part. The inverter may include a printed circuit board (PCB) and power switches. The PCB may be located in the center of the second part. The power switches may be located outside of the PCB. The power switches may be located on an opposing face of the coolant channel. A spring may be affixed to the opposing face or a lid of the second part, and the spring may apply a force to the power switches in the direction of the coolant channel. The force may be configured to press the power switches against the opposing face. A flexible lead may connect between the power switches and the PCB.

A connector may be connected to the second part. The connector may include high-voltage power terminals and signal terminals. The high-voltage power terminals may be shielded. The signal terminals may be shielded separately from the high-voltage power terminals. The power terminals may comprise interlock terminals. The high voltage may be greater than 100 volts direct current (VDC). For example, the high voltage may be between 100 and 1500 VDC. A negative terminal of the high-voltage terminals may be located between a positive terminal of the high-voltage terminals and the signal terminals.

The electric motor may comprise a rotor, and the rotor may comprise a shaft. The shaft may enter the second part of the housing and be located adjacent to the PCB. The shaft may include a fiducial mark, and the fiducial mark may include a visible contrast, a mechanical variation, or a magnetic material. Between the PCB and the electric motor may be phase conductors located around the shaft. The phase conductors may induce a current on the shaft as a fiducial mark. The PCB may include a sensor thereon configured to sense the fiducial mark and produce a signal related to a rotational speed of the shaft. For example, the sensor may be an optical sensor, a proximity sensor, or a magnetic sensor.

These and other features and advantages are described in greater detail below.

### BRIEF DESCRIPTION OF THE DRAWINGS

These and other features, aspects, and advantages of the present disclosure may become better understood with regard to the following description, claims, and drawings. The present disclosure is illustrated by way of example, and not limited by, the accompanying figures.
FIG. 1 schematically depicts a cross-sectional view of an integrated electric motor and inverter.
FIG. 2 schematically depicts a top view of an integrated electric motor and inverter.
FIG. 3 schematically depicts a connector for an integrated electric motor and inverter.
FIG. 4 schematically depicts an isometric view of a second housing part.
FIG. 5 schematically depicts a cut-out isometric view of a shaft, a fiducial, and a sensor.

### DETAILED DESCRIPTION

In the following description of the various examples, reference is made to the accompanying drawings, which form a part hereof, and in which is shown by way of illustration various examples in which the present disclosure may be practiced. It is to be understood that other examples may be utilized, and structural and functional modifications may be made without departing from the scope of the present disclosure. Unless defined otherwise, all technical and scientific terms used herein have the same meaning as commonly understood by one of ordinary skill in the art to which this present disclosure belongs.

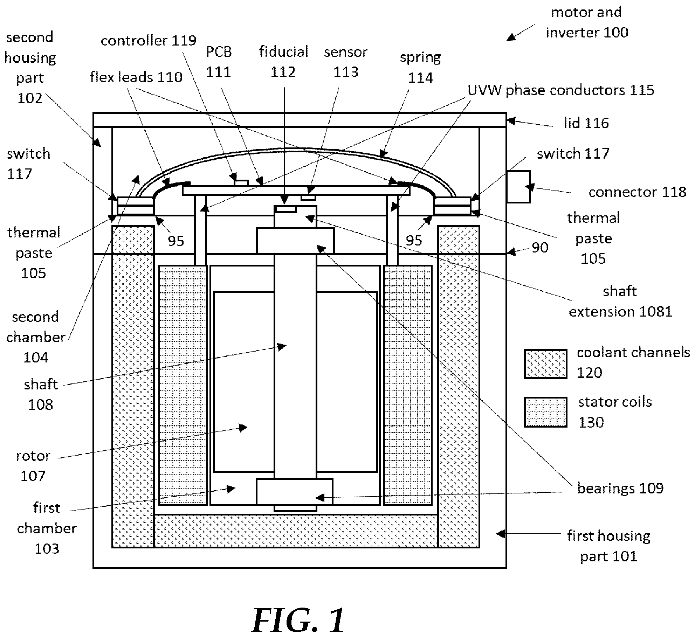

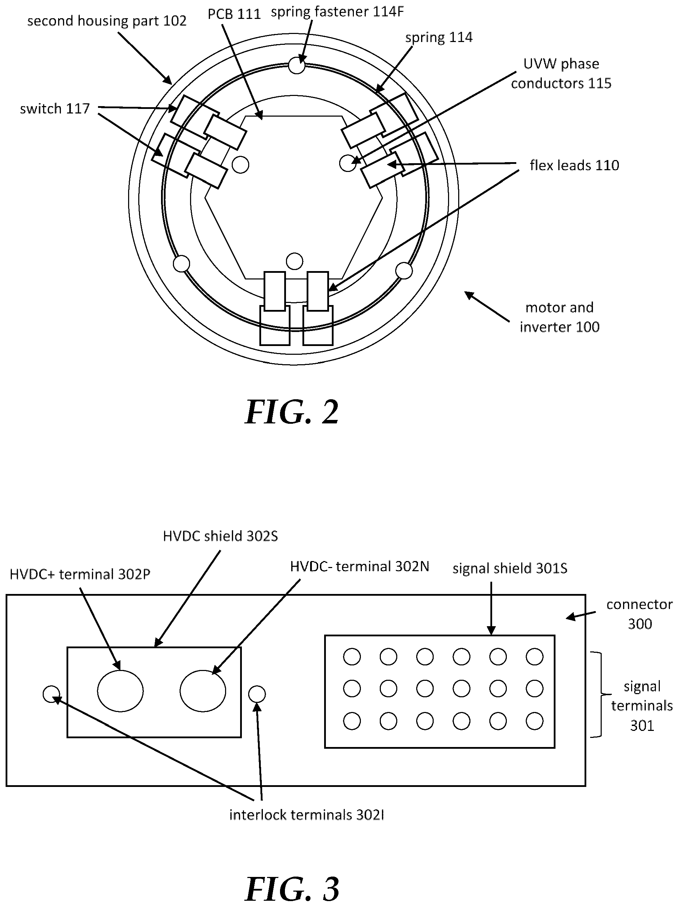

Reference is now made to FIG. 1, which schematically depicts a cross-sectional view of an integrated electric motor and inverter 100. The integrated electric motor and inverter 100 may comprise an electric motor with an inverter. The integrated electric motor and inverter 100 may comprise a housing. The housing may comprise two parts or two housing parts: a first housing part (or a first part) 101 and a second housing part (or a second part) 102. The first housing part 101 may comprise, at a first (lower in the FIG. 1 view) end, a base from which upstands a circumferential wall terminating at a second (upper in the FIG, 1 view) end of the first housing part 101. In other embodiments, the first housing part may not be cylindrical but may, for example, be polygon in cross-section. The second housing part 102 may comprise a circumferential wall that at a first (lower in the FIG. 1 view) end thereof is adjacent the second end of the first housing part 101 and extends to a second (upper in the FIG. 1 1 view). In other embodiments, the second housing part 102 may not be cylindrical but may, for example, be polygon in cross-section. The boundary between the second end of the first housing part 101 and the first end of the second housing part 102 is labelled 90 in FIG. 1. Each housing part may define a chamber. Specifically, the first housing part 101 may define or comprise a first chamber 103, and the second housing part 102 may define or comprise a second chamber 104. Each housing part may comprise coolant channels (or coolant fluid channels) 120 that may be interconnected between the two housing parts. The second housing part 102 may comprise or be connected with a lid 116 that closes off the second end of the second housing part and a connector 118 which will be described in detail with respect to FIG. 3. In other embodiments, the second (upper in the FIG. 1 view) end of the second housing part 102 may be closed off by an end wall that is not removeable. A motor may be mounted substantially within the first chamber 103. More specifically, for example, the first chamber 103 of the first housing part 101 may incorporate (e.g., contain, hold, accommodate, etc.) a rotor 107 and stator coils 130 (or stator). The second chamber 104 of the second housing part 102 may incorporate (e.g., contain, hold, accommodate, etc.) an inverter. The coolant channels 120 may be interconnected to supply a coolant to the stator coils 130 of the motor. The inverter may include a printed circuit board (PCB) 111 for positioning electrical components of the inverter. The inverter may include power switches (or switches) 117, such as insulated gate bipolar transistors (IGBTs), metal oxide semiconductor field effect transistors (MOSFETs), bipolar junction transistors (BJTs), or the like. The power switches 117 may be located remotely or separately from the PCB 111. The power switches 117 may be located on a surface of the second housing part 102 on an opposing (or opposite) side (e.g., a second side) of the second housing part 102 from the side (e.g., a first side) where the coolant channels 120 are. More specifically referring to FIG. 1, the second housing part 102 may comprise a floor 95. The floor 95 may extend inwardly from the circumferential wall. The power switches 117 may be mounted on a first (upper side in FIG. 1 view) side of the floor 95 with the coolant channels being on a second opposite (under side in FIG. 1 view) of the floor 95. The second housing part 102, especially the floor 95, may be constructed of a material with high thermal conductivity so that the heat from the power switches 117 may be dissipated using the coolant flowing through the coolant channels 120. A thermal paste or thermal pads 105 may be placed between the power switches 117 and (e.g., the second side of) the second housing part 102, for example, the floor 95.. A spring 114 may be attached to (e.g., fastened to) the second housing part 102 or the lid 116 of the second housing part 102 using spring fasteners 114F (see FIG. 2). The spring 114 may be attached on the same side as the power switches 117. The spring 114 may apply a biasing force to the power switches 117 in the direction of the coolant channels 120 (e.g., against the second side of the second housing part 102 or the floor 95) to keep a good thermal contact between the power switches 117 and the coolant channels 120.

The power switches 117 may be connected to the PCB 111 using leads of the power switch. The power switches 117 may be connected (e.g., electrically connected) to the PCB 111 using one or more flexible leads 110 (or flex leads, such as flexible PCBs, metal leads, spring steel leads, stainless steel leads, nickel alloy leads, or the like). Each flexible lead 110 may connect one or more power switches 117 to the PCB 111 of the inverter. Using a flexible lead 110 may limit breaking of the lead of the power switch 117 when the lead is connected to the PCB 111. For example, a flexible lead 110 may limit the breaking of the lead due to vibration, thermal expansion, differences in thermal expansion between the second housing part 102 and the PCB 111, or the like.

The rotor 107 may include a shaft 108 and bearings 109 configured to allow the shaft 108 to rotate. The bearings 109 may be located on the first housing part 101 or the second housing part 102. The shaft 108 may include an extension 1081 that protrudes from the first chamber 103, through the second housing part 102, and into (or entering) the second chamber 104. The shaft extension 1081 may face the PCB 111. The shaft extension 1081 may include one or more fiducials (or fiducial marks or fiducial markers) 112 on the end of the shaft extension 1081. The fiducials 112 may be located near the PCB 111. The PCB 111 may include one or more sensors 113 configured to detect or monitor the fiducials 112. For example, the one or more sensors 113 may face the shaft extension 1081. When the shaft 108 rotates, the sensor 113 may detect or monitor the rotation of the fiducials 112 on the shaft extension 1081, and a controller 119 may convert signals from the sensor 113 to measurements of a rotation speed of the shaft 108. For example, the fiducial 112 may comprise a magnetic material, and the sensor 113 may be a magnetic sensor. For example, the shaft 108 may include a paramagnetic material. The magnetic material may be induced by application of a strong magnet to one side of the shaft extension during manufacturing. For example, one or more phase conductors (e.g., UVW phase conductors) 115 may induce eddy currents on the shaft extension 1081 at the same location during each rotation of the shaft 108, and the sensor 113 may detect the rotation of the eddy currents. For example, the shaft extension 1081 may include a fiducial 112 that is a visual mark (e.g., a visible contrast), and the sensor 113 may be an optical sensor. For example, the fiducial 112 on the shaft extension 1081 may include an indentation (e.g., a slot), a protuberance, or height variation of the shaft extension 1081, and the sensor 113 may detect the indentation (e.g., a slot), the protuberance, or the height variation.

Reference is now made to FIG. 2, which schematically depicts a top view of an integrated electric motor and inverter 100. The top view shows the power switches 117 and the PCB 111. The flexible leads 110 may connect between the power switches 117 and the PCB 111. The phase conductors 115 may be located near the power switches 117. The phase conductors 115 may be located near the shaft extension 1081. The spring 114 may apply force to the power switches 117 in the direction of the coolant channels 120 on the opposing side of the second housing part 102 from the power switches 117. The spring 114 may be held in place with a spring fastener 114F that mechanically connects the spring 114 to the second part of the second housing part 102 or the lid 116.

Reference is now made to FIG. 3, which schematically depicts a connector 300 for an integrated electric motor and inverter 100. The connector 300 includes power terminals 302P and 302N and signal terminals 301. The power terminals may comprise a positive power terminal and a negative power terminal. For example, the power terminal 302P may be a HVDC+ (high-voltage direct current positive) terminal, and the power terminal 302N may be a HVDC- (high-voltage direct current negative) terminal. For example, the negative power terminal (e.g., the power terminal 302N) may be closer to the signal terminals 301 than the positive power terminal (e.g., the power terminal 302P). The connector 300 may include a shield 302S around (e.g., surrounding) the power terminals 302P and 302N. For example, the shield 302S may be a power shield such as an HVDC shield. The connector 300 may include a shield 301S around (e.g., surrounding) the signal terminals 301. For example, the shield 301S may be a signal shield. The power terminals 302P and 302N may include (e.g., a plurality of) interlock terminals 302I. The interlock terminals 302I may prevent the power terminals 302P and 302N from receiving power, for example, when the interlock terminals 302I are not connected.

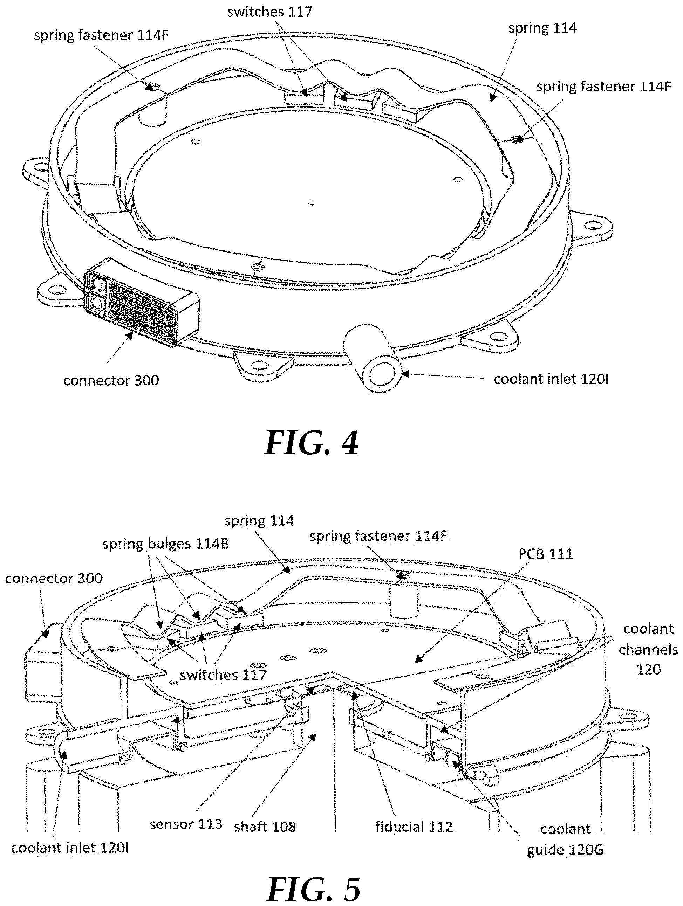

Reference is now made to FIG. 4, which schematically depicts an isometric view of the second housing part 102. The power switches 117 may be pressed against the second housing part 102 or the floor 95 of the second housing part by a spring 114. The spring 114 may be connected to the second housing part 102 by spring fasteners 114F. The spring 114 may be connected to the lid 116 by spring fasteners 114F. A coolant inlet 120I may allow intake of coolant into the housing, and a coolant outlet may allow the coolant to exit. FIG. 4 also shows an example connector 300 as described herein.

Reference is now made to FIG. 5, which schematically depicts a cut-out isometric view of a shaft 108, a fiducial 112, and a sensor 113. A spring 114 may include spring bulges 114B, where each spring bulge 114B is configured to apply force to one or more of the power switches 117. The coolant channels 120 may include a coolant guide 120G to assist the supply of fresh, colder coolant from the coolant inlet 120I to the power switches 117 and may limit the mixing of the colder coolant with the warmer exhaust coolant. FIG. 5 also shows an example spring fastener 114F, an example PCB 111, and an example connector 300 as described herein.

Hereinafter, various characteristics will be highlighted in a set of numbered clauses. These characteristics are not to be interpreted as being limiting on the invention or inventive concept, but are provided merely as a highlighting of some characteristics as described herein, without suggesting a particular order of importance or relevancy of such characteristics.

Clause 1. A device comprising: an electrical motor, comprising: an inverter; a rotor; a stator comprising stator coils; and a housing, wherein the inverter comprises: a printed circuit board (PCB); power switches; and one or more phase conductors, wherein the housing comprises a first part and a second part, wherein the first part comprises a first chamber that incorporates the rotor and the stator, wherein the second part comprises a second chamber that incorporates the inverter, wherein the second part comprises a lid and a connector, wherein the first part and the second part each comprise coolant channels, wherein the coolant channels are interconnected to supply a coolant to the stator coils and the power switches, wherein the coolant channels of the second part are on a first side of the second part and the power switches are on a second side of the second part.

Clause 2. The device of clause 1, further comprising a spring, and wherein the power switches are pressed against the second side of the second part using the spring.

Clause 3. The device of clause 1 or clause 2, wherein a thermal paste is placed between the power switches and the second side of the second part.

Clause 4. The device of any one of clauses 1 to 3, wherein the spring is fastened to the second part or the lid.

Clause 5. The device of any one of clauses 1 to 4, wherein the rotor comprises a shaft and bearings.

Clause 6. The device of clause 5, wherein the bearings are located on the first part or the second part.

Clause 7. The device of clause 5, wherein the shaft comprises an extension entering the second chamber, and wherein the extension faces the PCB.

Clause 8. The device of clause 7, wherein the extension comprises a fiducial marker.

Clause 9. The device of clause 8, wherein the fiducial marker is a visual mark, an indentation, a protuberance, or a magnetic material.

Clause 10. The device of clause 8, wherein the PCB comprises a sensor configured to monitor the fiducial marker, wherein the sensor faces the extension.

Clause 11. The device of any one of clauses 1 to 10, wherein the connector comprises signal terminals and power terminals.

Clause 12. The device of clause 11, wherein the connector comprises a signal shield surrounding the signal terminals.

Clause 13. The device of clause 11, wherein the connector comprises a power shield surrounding the power terminals.

Clause 14. The device of clause 11, wherein the power terminals comprise a positive power terminal, a negative power terminal, and a plurality of interlock terminals, and wherein the negative power terminal is closer to the signal terminals than the positive power terminal.

Clause 15. The device of any one of clauses 1 to 14, wherein the inverter comprises a plurality of flexible leads, and wherein the power switches are electrically connected to the PCB using the plurality of flexible leads.

Clause 16. The device of clause 11, wherein the power terminals comprise a positive power terminal and a negative power terminal.

Clause 17. The device of clause 16, wherein the negative power terminal is closer to the signal terminals than the positive power terminal.

Clause 18. The device of clause 17, wherein the power terminals comprise a plurality of interlock terminals.

Clause 19. A connector comprising: signal terminals; power terminals comprising a positive power terminal, a negative power terminal, and a plurality of interlock terminals; a signal shield surrounding the signal terminals; and a power shield surrounding the power terminals, wherein the negative power terminal is closer to the signal terminals than the positive power terminal.

Clause 20. A device comprising:
a housing comprising a first part and a second part; wherein the first part comprises a first end, a second end, and at least one wall connecting the first and second ends, wherein the first end, the second end and the at least one wall define a first chamber; a second part comprising a first end that is adjacent the first part, a second end that is remote from the first part, and at least one wall connecting the first and second ends, wherein the first end, the second end and the at least one wall define a second chamber; wherein the second part further comprises a floor part-way between the first end and the second end of the second part; wherein the device further comprises: a motor mounted substantially within the first chamber; an inverter, located within in the second chamber, comprising a printed circuit board, PCB, and power switches that are mechanically mounted, remote from the PCB, on the floor and electrically connected to the printed circuit board by leads;
wherein the first part and the second part each comprise coolant channels that are interconnected and arranged to supply coolant to both coolant channels adjacent the motor in the first chamber and to coolant channels at the first end of the second part adjacent the side of the floor opposite to the side to which the power switches are mechanically mounted in the second chamber.

In the description of various illustrative features, reference is made to the accompanying drawings, which form a part hereof, and in which is shown, by way of illustration, various features in which aspects of the disclosure may be practiced. It is to be understood that other features may be utilized, and structural and functional modifications may be made, without departing from the scope of the present disclosure.

It may be noted that various connections are set forth between elements herein. These connections are described in general and, unless specified otherwise, may be direct or indirect; this specification may be not intended to be limiting in this respect. Further, elements of one feature may be combined with elements from other features in appropriate combinations or sub-combinations.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

## Claims

1. A device comprising:
an electric motor, comprising:
an inverter;
a rotor;
a stator comprising stator coils; and
a housing,
wherein the inverter comprises:
a printed circuit board (PCB);
power switches; and
one or more phase conductors,
wherein the housing comprises a first part and a second part,
wherein the first part comprises a first chamber that incorporates the rotor and the stator,
wherein the second part comprises a second chamber that incorporates the inverter,
wherein the second part comprises a lid and a connector,
wherein the first part and the second part each comprise coolant channels,
wherein the coolant channels are interconnected to supply a coolant to the stator coils and the power switches,
wherein the coolant channels of the second part are on a first side of the second part and the power switches are on a second side of the second part.

2. The device of claim 1, further comprising a spring, and wherein the power switches are pressed against the second side of the second part using the spring.

3. The device of claim 1 or claim 2, wherein a thermal paste is placed between the power switches and the second side of the second part.

4. The device of any one of claims 1 to 3, wherein the spring is fastened to the second part or the lid.

5. The device of any one of claims 1 to 4, wherein the rotor comprises a shaft and bearings.

6. The device of claim 5, wherein the bearings are located on the first part or the second part.

7. The device of claim 5, wherein the shaft comprises an extension entering the second chamber, and wherein the extension faces the PCB.

8. The device of claim 7, wherein the extension comprises a fiducial marker.

9. The device of claim 8, wherein the fiducial marker is a visual mark, an indentation, a protuberance, or a magnetic material.

10. The device of claim 8, wherein the PCB comprises a sensor configured to monitor the fiducial marker, wherein the sensor faces the extension.

11. The device of any one of claims 1 to 10, wherein the connector comprises signal terminals and power terminals.

12. The device of claim 11, wherein the connector comprises a signal shield surrounding the signal terminals.

13. The device of claim 11, wherein the connector comprises a power shield surrounding the power terminals.

14. The device of claim 11, wherein the power terminals comprise a positive power terminal, a negative power terminal, and a plurality of interlock terminals, and wherein the negative power terminal is closer to the signal terminals than the positive power terminal.

15. The device of any one of claims 1 to 14, wherein the inverter comprises a plurality of flexible leads, and wherein the power switches are electrically connected to the PCB using the plurality of flexible leads.
